Europäisches Patentamt

European Patent Office

Office européen des brevets

(19)

(11) Veröffentlichungsnummer : **0 170 763**
**B1**

(12) **EUROPÄISCHE PATENTSCHRIFT**

(45) Veröffentlichungstag der Patentschrift :
**11.01.89**

(21) Anmeldenummer : **85100847.4**

(22) Anmeldetag : **28.01.85**

(51) Int. Cl.⁴ : **C 23 C 4/12**, C 23 C 4/10

(54) **Verschleissfeste Beschichtung.**

(30) Priorität : **09.06.84 DE 3421569**

(43) Veröffentlichungstag der Anmeldung :
**12.02.86 Patentblatt 86/07**

(45) Bekanntmachung des Hinweises auf die Patenterteilung : **11.01.89 Patentblatt 89/02**

(84) Benannte Vertragsstaaten :
**DE FR GB IT**

(56) Entgegenhaltungen :
**EP--A-- 0 114 232**
**EP--A-- 0 123 952**
**DE--B-- 1 281 769**
**DE--C-- 3 244 073**
**FR--A-- 1 393 475**
**GB--A-- 2 130 250**
**US--A-- 3 545 944**
**US--A-- 4 248 940**
**PATENTS ABSTRACTS OF JAPAN, Band 6, Nr. 154
(C-119)[1032], 14. August 1982**

(73) Patentinhaber : **GOETZE AG**
**Bürgermeister-Schmidt-Strasse 17**
**D-5093 Burscheid 1 (DE)**

(72) Erfinder : **Buran, Ulrich, Dipl.-Ing.**
**Neuenhaus 26 a**
**D-5093 Burscheid (DE)**
Erfinder : **Fischer, Manfred, Dr.**
**Moltkestrasse 15 a**
**D-5653 Leichlingen 1 (DE)**
Erfinder : **Neuhäuser, Hans-Jochem, Dr.**
**Hufer Weg 13**
**D-5060 Bergisch-Gladbach 2 (DE)**

**Beschreibung**

Die Erfindung betrifft die Verwendung eines in einem Flammspritzverfahren ganzflächig in überspritzter Form oder in Nuten in gekammerter Form mit radial von innen nach außen sich ändernder Struktur und/oder Zusammensetzung aufgetragenen Überzuges.

Zur Verbesserung der Lebensdauer von extremen Verschleißbelastungen ausgesetzten Maschinenteilen ist es üblich, diese mit im Flammspritzverfahren beziehungsweise Plasmaspritzverfahren aufgetragenen Verschleißschutzschichten aus bevorzugt Metallen, metallkeramischen Materialien und/oder rein keramischen Materialien zu überziehen. Auf den Laufflächen von Kolbenringen haben sich dabei vor allem durch ein Flammspritzverfahren aufgetragene Molybdänschichten beziehungsweise nach dem Plasmaspritzverfahren aufgetragene molybdänhaltige Schichten besonders bewährt, die auf die Laufflächen entweder ganzflächig in überspritzter Form oder in Nuten in gekammerter Form aufgetragen sind.

Bei extremen Belastungen von Kolbenringen, wie beispielsweise beim Trockenlauf im Schadensfall des Motors oder in modernen schnellaufenden Dieselmotoren, insbesondere mit Turboaufladung, können in den Molybdänschichten als Folge von Überhitzungen Rißbildungen entstehen, die zu Schichtabschuppungen und Schichtausbrüchen führen. Deshalb werden schon vor allem Molybdänlegierungen oder andere Legierungen sowie keramische Werkstoffe mit oder ohne Zusatz an niedrigschmelzenden Legierungen oder intermetallischen Verbindungen als Bindemetall zur Beschichtung von Kolbenringen eingesetzt.

Nach der DE-PS 32 44 073 sind beispielsweise auch keramische Plasmaspritzpulver aus 50 bis 90 Gewichtsprozent Aluminiumoxid ($Al_2O_3$), 5 bis 40 Gewichtsprozent Titandioxid ($ToO_2$) sowie 5 bis 30 Gewichtsprozent Lanthanoxid ($La_2O_3$) und-/oder Nioboxid ($Nb_2O_5$) mit gegebenenfalls einem Anteil von 30 Gewichtsprozent Calciumcarbonat für die Herstellung verschleißfester Beschichtungen bekannt. Solche Spritzpulverzusammensetzungen sind aber nicht universell einsetzbar und bringen nur zum Teil den gewünschten Erfolg.

Beschichtungen auf den Laufflächen von auf reibenden Verschleiß ausgesetzten Maschinenteilen müssen außer einer guten und temperaturfesten Haftung (Adhäsion) am Substrat und einer guten temperaturfesten Bindung innerhalb der Schicht (Kohäsion) auch in mit dem Reibungspartner in Berührung stehenden Oberflächenbereich unter anderem brandspursicher und verschleißfest sein, sie sollen dort Poren zur Aufnahme von Schmiermitteln enthalten, beim Trockenlauf eine ausreichende Eigenschmierung besitzen und in der Einlaufphase soll ihr Eigenverschleiß zur Anpassung an die Gegenflächen ausreichen. Darüberhinaus sollen diese Schichten eine hohe Ausbruchsicherheit haben und auch nach langen Laufzeiten kein oder nur ein geringes Ermüdungsverhalten zeigen. Ebenso sollen, insbesondere bei gekammerten Spritzschichten, die thermischen Ausdehnungskoeffizienten des Substrats und des Schichtwerkstoffs einander angeglichen sein, damit Spannungsbildungen mit nachfolgenden Schichtausbrüchen im motorischen Betrieb nicht entstehen können. Die bisher entwickelten Legierungsschichten oder Keramikschichten weisen aber meist nicht alle diese Eigenschaften zugleich auf und Maßnahmen, mit denen beispielsweise durch Hartmetallzusatz die Verschleißfestigkeit der Schichten gesteigert werden kann, führten andererseits wieder zu einem Nachlassen der Haftfestigkeit der Schichten am Substrat beziehungsweise der Schichteigenfestigkeit, so daß diese Schichten nicht ausbruchsicher und thermoschockempfindlich sind.

In der Beschichtungstechnik von Kolbenringen, wie beispielsweise beim galvanischen Hartchromauftrag, ist es üblich, Zwischenschichten zur Verbesserung der Hartchromschicht am Substrat einzusetzen oder die Oberflächen mit Weichmetallschichten zur Verbesserung des Einlaufverhaltens der Ringe zu versehen. Diese Maßnahmen sind zwar vielfach wirkungsvoll, das Auftragen der Zwischen- und Einlaufschichten erfordert aber zusätzliche, die Kosten des Ringes verteuernde Verfahrensschritte und wegen der mangelnden Haftung der einzelnen Schichten untereinander entstehen bei extremen Belastungen ebenfalls Schäden.

Darüber hinaus ist es aus der Beschichtungstechnik beim thermischen Aufspritzen von Überzügen bekannt, die Spritzschicht als sogenannte gradierte Spritzschicht aufzutragen. So werden beispielsweise nach der US-PS 4.248.940 die Wandungen von Vorverbrennungskammern oder von Nachverbrennungskammern sowie von Tragflächen, Propellerflügeln oder Überführungskanälen vor allem zum Zweck der thermischen Isolation, aber auch zur Erhöhung der Thermoschockbeständigkeit und Druckfestigkeit sowie zur Anpassung der thermischen Ausdehnung mit gesinterten Spritzschichten versehen.

Nach der FR-PS 1.393.475 werden Kolben von Verbrennungskraftmaschinen sowie Explosionskammern, Motoren und Ventilen mit gradierten Überzügen versehen, um vor allem die thermische Isolation dieser Maschinenteile zu verbessern.

Nach « Patents Abstracts », Band 6, Nr. 154, werden metallkeramische Spritzschichten vor allem zur Verbesserung ihrer Haftung gradiert aufgespritzt.

Der vorliegenden Erfindung liegt die Aufgabe zugrunde, die Laufflächen von auf reibenden Verschleiß belasteten Maschinenteilen, und zwar insbesondere die Laufflächen von Kolbenringen, mit durch ein Flammspritzverfahren beziehungsweise vorwiegend Plasmaspritzverfahren aufgetragenen verschleißfesten Schichten zu versehen, die auch gegebenenfalls extremen Belastungen standhalten können. Das Verfahren der Herstellung der Schichten soll möglichst einfach und kostensparend sein, und vor allem soll es dem Fachmann möglich sein, die verschleißfesten Beschichtungen mit auf den jeweiligen Anwendungsfall abgestimmten Eigenschaften herzustellen.

Erfindungsgemäß wird diese Aufgabe durch die Verwendung eines in einem Flammspritzverfahren ganzflächig in überspritzter Form oder in Nuten in gekammerter Form mit radial von innen nach außen sich kontinuierlich ändernder Struktur und/oder Zusammensetzung aufgetragenen verschleißfesten Überzuges für die Laufflächen von auf reibenden Verschleiß beanspruchten Maschinenteilen gelöst. Bevorzugt wird dabei der Überzug durch Plasmaspritzen auf die Laufflächen von Kolbenringen aufgetragen.

Bei kontinuierlicher Veränderung der Struktur der Beschichtung nimmt bevorzugt die Porosität der Schicht von innen nach außen kontinuierlich zu.

Bei kontinuierlicher Veränderung der Zusammensetzung der Beschichtung besteht das aufzutragende Spritzpulvergemisch bevorzugt aus mindestens zwei unterschiedlichen Komponenten, das sich ständig in seiner Zusammensetzung ändert.

Bei einer bevorzugten Beschichtung verändert sich die Zusammensetzung kontinuierlich radial von innen nach außen von 25 % Molybdän, 50 % Molybdänkarbid ($Mo_2C$) und/oder Chromkarbid ($Cr_3C_2$) und 25 % Bindemetall auf 65 % Mo, 10 % $Mo_2C$ und/oder $Cr_3C_2$ und 25 % Bindemetall.

Bei einer weiteren bevorzugten Beschichtung verändert sich die Zusammensetzung kontinuierlich radial von innen nach außen von 55 % Aluminiumoxid ($Al_2O_3$), 35 % Titandioxid ($TiO_2$) und 10 % Lanthanoxid ($La_2O_3$) und/oder Nioboxid mit 20 % Calciumkarbonat bezogen auf $La_2O_3$ und/oder Nioboxid auf 40 % $Al_2O_3$, 25 % $TiO_2$, 25 % Bindemetall und 10 % $La_2O_3$ und/oder Nioboxid mit 20 % Calciumkarbonat bezogen auf $La_2O_3$ und/oder Nioboxid.

Bei einer weiteren bevorzugten Beschichtung verändert sich die Zusammensetzung radial von innen nach außen von 20 % Molybdän, 60 % Ferrochrom und/oder Chrom und 20 % Bindemetall auf 60 % Molybdän, 15 % Ferrochrom und/oder Chrom und 25 % Bindemetall.

Vor dem Auftrag der verschleißfesten Beschichtung kann auf das Substrat eine haftverbessernde Schicht aufgetragen sein. Sie besteht bevorzugt aus Molybdän, einer Nickel-Chrom-Legierung und/oder Nickel-Chrom-Aluminium-Legierung.

Die verschleißfeste Beschichtung kann zusätzlich bis zu 25 Gewichtsprozent einer intermetallischen Verbindung auf der Basis von Kobalt und/oder Nickel enthalten. Außerdem kann die Schicht bis zu 25 % Festschmierstoffe, wie vor allem Molybdändisulfid, Wolframdisulfid, Bornitrid, Calciumfluorid, Nickelgraphit und/oder PTFE-Pulver enthalten.

Durch die Erfindung ist somit eine verschleißfeste Beschichtung geschaffen, deren Eigenschaften durch die kontinuierlich sich ändernde Zusammensetzung optimal an die geforderten Belastungsverhältnisse angepaßt ist.

Dadurch, daß die innere am Substrat liegende Schichtzusammensetzung so ausgewählt ist, daß sie eine optimale Haftung zum Substrat gewährleistet, ist auch die Haftung der gesamten Beschichtung am Substrat auch extremen Belastungen unter Überhitzung gewachsen. Durch die Verwendung höherer Anteile an verschleißfesten Bestandteilen sowie die Verwendung von Festschmierstoffen und die höhere Porosität der äußeren Schichtbereiche, ist die gesamte Beschichtung zugleich verschleißfest und brandspursicher, sie gewährleistet einen guten Einlauf und gute Eigenschmierung im Notfall. Bei der bevorzugt qualitativ einheitlichen Zusammensetzung entstehen durch die kontinuierlich sich ändernden Zusammensetzungsverhältnisse zwischen den einzelnen Lagen beim Auftrag keine Haftungsprobleme.

Das Verfahren der Herstellung der verschleißfesten Beschichtung ist dabei relativ einfach und kostensparend. Der Auftrag kann mit mehreren, bevorzugt aber nur einer einzigen Spritzpistole erfolgen, bei denen die Zuführmengen der einzelnen im Gemisch zu verspritzenden Komponenten automatisch und gegebenenfalls elektronisch kontinuierlich verändert werden. Bei dem Auftragsverfahren kann der Fachmann auch bei Entwicklungsversuchen die Zuführmengen der einzelnen Komponenten nach seinen Überlegungen kontinuierlich so variieren, daß er relativ einfach und schnell die optimale Zusammensetzung der Spritzschichten für den jeweiligen Anwendungsfall finden kann.

Die Erfindung wird anhand zweier Abbildungen näher erläutert, und zwar zeigt

Figur 1 den Querschnitt durch einen Kolbenring mit einer Beschichtung in überspritzter Form und

Figur 2 eine graphische Darstellung der sich kontinuierlich verändernden Zusammensetzungsverhältnisse in der Spritzschicht.

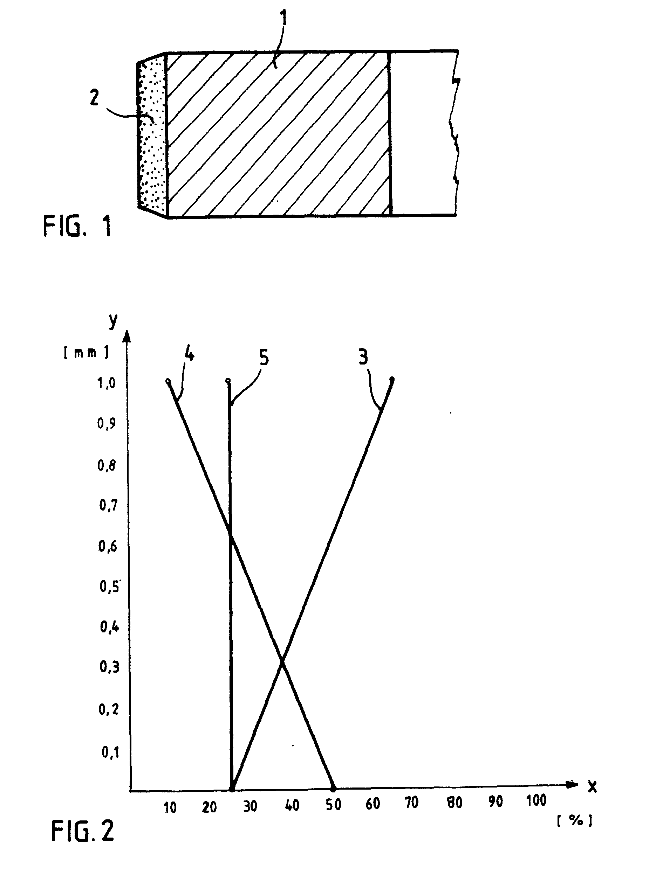

In Figur 1 ist 1 der Kolbenring mit einer Beschichtung 2, dessen Zusammensetzung sich radial von innen ach außen kontinuierlich ändert.

In der Figur 2 ist im Koordinationskreuz auf der y-Achse die Dicke der Beschichtung 2 im vergrößerten Maßstab und auf der x-Achse der prozentuale Anteil der Komponenten der Beschichtung 2 dargestellt.

Ausgegangen wird von einer Schichtzusammensetzung aus 25 % Molybdän, 50 % Molybdänkarbid und 25 % Bindemetall, die sich radial nach außen auf 65 % Molybdän, 10 % Molybdänkarbid und 25 % Bindemetall verändert.

Kurve 3 zeigt die Veränderung des Molybdängehalts, Kurve 4 zeigt die Veränderung des Molybdänkarbidgehalts und Kurve 5 den Bindemetallgehalt in der Beschichtung 2.

**Patentansprüche**

1. Verwendung eines in einem Flammspritzverfahren ganzflächig in überspritzter Form oder in Nuten in gekammerter Form mit radial von innen nach außen sich kontinuierlich ändernder Struktur und/oder Zusammensetzung aufgetragenen verschleißfesten Überzuges für die Laufflächen von auf reibenden Verschleiß beanspruchten Maschinenteilen.

2. Verwendung nach Anspruch 1, dadurch gekennzeichnet, daß die Porosität des Überzuges radial von innen nach außen zunimmt.

3. Verwendung nach mindestens einem der Ansprüche 1 und 2, dadurch gekennzeichnet, daß der Überzug (2) aus einem Spritzpulvergemisch mit mindestens zwei unterschiedlichen Komponenten besteht.

4. Verwendung nach mindestens einem der Ansprüche 1 bis 3, dadurch gekennzeichnet, daß im radial inneren Bereich des Überzuges ein die Haftung verbesserndes und die Zerrüttungsneigung reduzierendes Legierungselement dominiert, während im radial äußeren Bereich des Überzuges ein Legierungselement mit hohem Verschleißwiderstand dominiert.

5. Verwendung nach mindestens einem der Ansprüche 1 und 4, dadurch gekennzeichnet, daß vor dem Auftrag des verschleißfesten Überzuges (2) auf das Substrat eine haftverbessernde Schicht aufgetragen wird.

6. Verwendung nach mindestens einem der Ansprüche 1 bis 5, dadurch gekennzeichnet, daß die haftverbessernde Schicht aus Molybdän, einer Nickel-Chrom-Legierung, einer Nickel-Aluminium-Legierung und/oder einer Nickel-Chrom-Aluminium-Legierung besteht.

7. Verwendung nach mindestens einem der Ansprüche 1 bis 6, dadurch gekennzeichnet, daß die Zusammensetzung radial von innen nach außen von 25 % Molybdän, 50 % $Mo_2C$ und/oder $Cr_3C_2$ und 25 % Bindemetall auf 65 % Mo, 10 % $Mo_2C$ und/oder $Cr_3C_2$ und 25 % Bindemetall verändert.

8. Verwendung nach mindestens einem der Ansprüche 1 bis 7, dadurch gekennzeichnet, daß die Zusammensetzung des Überzuges (2) sich radial von innen nach außen von 20 % Molybdän, 60 % Ferrochrom und/oder Chrom und 20 % Bindemetall auf 60 % Molybdän, 15 % Ferrochrom und/oder Chrom und 25 % Bindemetall verändert.

9. Verwendung nach mindestens einem der Ansprüche 1 bis 8, dadurch gekennzeichnet, daß die Zusammensetzung sich radial von innen nach außen von 55 % $Al_2O_3$, 35 % $TiO_2$ sowie $La_2O_3$ und/oder Nioboxid als Rest mit einem Anteil von 20 % Calciumcarbonat bezogen auf $La_2O_3$ und/oder Nioboxid auf 40 % $Al_2O_3$, 25 % $TiO_2$, 25 % Bindemetall sowie $La_2O_3$ und/oder Nioboxid als Rest mit einem Anteil von 20 % Calciumkarbonat bezogen auf $La_2O_3$ und/oder Nioboxid verändert.

10. Verwendung nach mindestens einem der Ansprüche 1 bis 7, dadurch gekennzeichnet, daß sie intermetallische Verbindung auf der Basis von Kobalt und/oder Nickel von bis zu 25 % enthält.

11. Verwendung nach mindestens einem der Ansprüche 1 bis 8, dadurch gekennzeichnet, daß sie bis zu 25 % eines Festschmierstoffes enthält.

12. Verwendung nach Anspruch 11, dadurch gekennzeichnet, daß die Festschmierstoffe aus Molybdändisulfid, Wolframdisulfid, Bornitrid, Calciumfluorid, Nickelgraphit und/oder PTFE-Pulver bestehen.

13. Verwendung nach mindestens einem der Ansprüche 1 bis 11, dadurch gekennzeichnet, daß der Überzug durch ein Plasmaspritzverfahren auf die Laufflächen von Kolbenringen aufgetragen ist.

**Claims**

1. Use of wear-resistant coating applied in a flame spraying process over the entire surface in sprayed-over form or in grooves in chambered form with a composition and/or structure which continuously varies radially in an outward direction, for the running surfaces of machine components which are loaded in respect of frictional wear.

2. Use according to claim 1 characterised in that the porosity of the coating increases radially in an outward direction.

3. Use according to at least one of claims 1 and 2 characterised in that the coating (2) comprises a spray powder mixture with at least two different components.

4. Use according to at least one of claims 1 to 3 characterised in that an alloying element for improving adhesion and for reducing the tendency to breaking down dominates in the radially inward region of the coating while an alloying element with a high level of resistance to wear dominates in the radially outward region of the coating.

5. Use according to at least one of claims 1 and 4 characterised in that prior to application of the wear-resistant coating (2) to the substrate, an adhesion-improving layer is applied thereto.

6. Use according to at least one of claims 1 to 5 characterised in that the adhesion-improving layer comprises molybdenum, a nickel-chromium alloy, a nickel-aluminium alloy and/or a nickel-chromium-aluminium alloy.

7. Use according to at least one of claims 1 to 6 characterised in that the composition varies radially in an outward direction from 25 % molybdenum, 50 % $Mo_2C$ and/or $Cr_3C_2$ and 25 % binding metal to 65 % Mo, 10 % $Mo_2C$ and/or $Cr_3C_2$ and 25 % binding metal.

8. Use according to at least one of claims 1 to 7 characterised in that the composition of the coating (2) varies radially in an outward direction from 20 % molybdenum, 60 % ferrochromium and/or chromium and 20 % binding metal to 60 % molybdenum, 15 % ferrochromium and/or chromium and 25 % binding metal.

9. Use according to at least one of claims 1 to 8 characterised in that the composition varies radially in an outward direction from 55 % $Al_2O_3$, 35 % $TiO_2$ and $La_2O_3$ and/or niobium oxide as the balance with a proportion of 20 % calcium carbonate with respect to $La_2O_3$ and/or niobium oxide, to 40 % $Al_2O_3$, 25 % $TiO_2$, 25 % binding metal and

La$_2$O$_3$ and/or niobium oxide as the balance with a proportion of 20 % calcium carbonate with respect to La$_2$O$_3$ and/or niobium oxide.

10. Use according to at least one of claims 1 to 7 characterised in that it contains an intermetallic compound based on cobalt and/or nickel, of up to 25 %.

11. Use according to at least one of claims 1 to 8 characterised in that it contains up to 25 % of a solid lubricant.

12. Use according to claim 11 characterised in that the solid lubricants comprise molybdenum disulphide, tungsten disulphide, boron nitride, calcium fluoride, nickel graphite and/or PTFE powder.

13. Use according to at least one of claims 1 to 11 characterised in that the coating is applied to the running surfaces of piston rings by a plasma spraying process.

## Revendications

1. Utilisation d'un revêtement résistant à l'usure appliqué par une méthode de projection à la flamme, soit à pleine surface sous forme d'un badigeon, soit dans des rainures sous forme d'inclusions, avec une structure et/ou une composition variant de façon continue radialement de l'intérieur vers l'extérieur, pour les chapes de pièces de machine soumises à une usure par frottement.

2. Utilisation selon la revendication 1, caractérisée en ce que la porosité du revêtement augmente radialement de l'intérieur vers l'extérieur.

3. Utilisation selon au moins une des revendications 1 et 2, caractérisée en ce que le revêtement (2) se compose d'un mélange de poudres projetées avec au moins deux composés différents.

4. Utilisation selon au moins une des revendications 1 à 3, caractérisée en ce qu'un élément de l'alliage améliorant l'adhérence et réduisant la tendance à la désorganisation est majoritaire dans la partie radialement intérieure du revêtement tandis que dans la partie du revêtement radialement extérieure, un élément de l'alliage ayant une grande résistance à l'usure est majoritaire.

5. Utilisation selon au moins une des revendications 1 et 4, caractérisée en ce qu'avant l'application du revêtement (2) résistant à l'usure, une couche améliorant l'adhérence est appliquée sur le substrat.

6. Utilisation selon au moins une des revendications 1 à 5, caractérisée en ce que la couche améliorant l'adhérence est faite de molybdène, d'un alliage nickel-chrome, d'un alliage nickel-aluminium et/ou d'un alliage nickel-chrome-aluminium.

7. Utilisation d'après au moins une des revendications 1 à 6, caractérisée en ce que la composition varie radialement de l'intérieur vers l'extérieur depuis 25 % de molybdène, 50 % de Mo$_2$C et/ou de Cr$_3$C$_2$ et 25 % de métal liant jusqu'à 65 % de Mo, 10 % de Mo$_2$C et/ou de Cr$_3$C$_2$ et 25 % de métal liant.

8. Utilisation d'après au moins une des revendications 1 à 7, caractérisée en ce que la composition du revêtement (2) varie radialement de l'intérieur vers l'extérieur depuis 20 % de molybdène, 60 % de ferro-chrome et/ou de chrome et 20 % de métal liant jusqu'à 60 % de molybdène, 15 % de ferro-chrome et/ou de chrome et 25 % de métal liant.

9. Utilisation d'après au moins une des revendications 1 à 8, caractérisée en ce que la composition varie radialement de l'intérieur vers l'extérieur depuis 55 % de Al$_2$O$_3$, 35 % de TiO$_2$ de même que de La$_2$O$_3$ et/ou d'oxyde de niobium comme reste avec une teneur de 20 % de carbonate de calcium ramenée au La$_2$O$_3$ et/ou à l'oxyde de niobium jusqu'à 40 % de Al$_2$O$_3$, 25 % de TiO$_2$, 25 % de métal liant de même que de La$_2$O$_3$ et/ou d'oxyde de niobium comme reste avec une teneur de 20 % de carbonate de calcium ramenée au La$_2$O$_3$ et/ou à l'oxyde de niobium.

10. Utilisation d'après au moins une des revendications 1 à 7, caractérisée en ce qu'elle comporte une liaison intermétallique à base de cobalt et/ou de nickel jusqu'à 25 %.

11. Utilisation d'après au moins une des revendications 1 à 8, caractérisée en ce qu'elle comporte jusqu'à 25 % de matériau dur de lubrification.

12. Utilisation d'après la revendication 11, caractérisée en ce que les matériaux durs de lubrification sont constitués par du sulfure de molybdène, du sulfure de tungstène, du nitrure de bore, du fluorure de calcium, du graphite de nickel et/ou de la poudre polytétrafluoréthylène.

13. Utilisation d'après au moins une des revendications 1 à 11, caractérisée en ce que le revêtement est appliqué par une méthode de projection au plasma sur les chapes de segments de piston.

FIG. 1

FIG. 2